Europäisches Patentamt

European Patent Office

Office européen des brevets

(19)

(11) Publication number: **0 158 979**

**A1**

(12) **EUROPEAN PATENT APPLICATION**

(21) Application number: **85104419.8**

(22) Date of filing: **11.04.85**

(51) Int. Cl.⁴: **B 23 K 31/06**

(30) Priority: **18.04.84 US 601662**

(43) Date of publication of application:
**23.10.85 Bulletin 85/43**

(84) Designated Contracting States:
**BE DE FR GB IT LU NL**

(71) Applicant: **Wheatland Tube Company**

**Wheatland Pennsylvania 16161(US)**

(72) Inventor: **Cronin, Richard**
**2709 Tibetts-Wick Road**
**Hubbard Ohio 44425(US)**

(72) Inventor: **Pennell, Earl P.**
**779 Portage Easterly Road**
**Cortland Ohio 444410(US)**

(74) Representative: **Patentanwälte Grünecker, Dr.**
**Kinkeldey, Dr. Stockmair, Dr. Schumann, Jakob, Dr.**
**Bezold, Meister, Hilgers, Dr. Meyer-Plath**
**Maximilianstrasse 58**
**D-8000 München 22(DE)**

(54) Continuous weld tube mill.

(57) A continuous weld tube mill and a process for making steel tubes or pipes includes the steps of and apparatus for preheating a steel strip to a temperature less than its welding temperature, forming the heated steel strip into a cylindrical shape with the strip edges being positioned immediately adjacent one another, induction heating the adjacent strip edges to the welding temperature for the steel while the intermediate portion of the strip remains cooler than the welding temperature, and welding the induction heated edges together to form the tube. In one embodiment, the weld seam is cooled until the tube temperature is substantially circumferentially uniform, and the tube is then reduced in diameter, cut to length and sized. In another embodiment, the cylindrically formed but unwelded strip is initially reduced, and thereafter the adjacent edges are induction heated and welded to form the tube, which is then cut and sized.

./...

Croydon Printing Company Ltd

FIG. 1

Title:      "Continuous Weld Tube Mill"

### FIELD OF THE INVENTION

The present invention relates to manufacturing of metal tubing, and specifically the present invention relates to an improved method and apparatus for continuously forming welded metal tubing from a flat metal strip.

### BACKGROUND OF THE INVENTION

Metal tubing has long been made from a flat strip by a continuous weld mill process. In this process, a metal strip called a skelp is heated in a gas fired furnace to about 2200°F, and the edges of the skelp are then heated to approximately 2400°F by direct impingement burners in the last and hottest stage of the furnace. The strip may then pass between two edge blowers which direct a stream of air across the strip to remove scale and increase edge temperature. The heated skelp is then passed through forming roll stands to form the skelp into cylindrical shape for welding. A welding horn which directs air or oxygen against the skelp edges to raise the temperature thereof to approximately 2700°F may be required immediately before the welding stand to obtain a reliable weld.

Rising energy costs have encouraged revisions in this well known process to reduce energy consumption. One such revised system replaces the preheat furnace with a smaller preheat furnace and an induction heater, both located upstream of the first shaping rolls. See, for example, U.S. Patent No. 4,357,512, issued November 2, 1982, entitled "Apparatus for Continuous Manufacture of Butt-Welded Pipe". Systems of this type may experience difficulty in maintaining proper edge temperature control for welding because the skelp must be bent into a tubular shape with the edges already at welding temperature. The heat induced in the edges tends to dissipate rapidly into the skelp, atmosphere and forming rolls. Therefore, a welding horn may be used in conjunction with the induction heater in this system to further heat the edges to a welding temperature of about 2700°F.

### SUMMARY OF THE INVENTION

The present invention provides a new and improved method and apparatus for making continuous welded tubing which reduces the energy consumed and provides more accurate temperature control of the welding process. According to the present invention, a flat steel strip called a skelp is passed through a furnace. It is preheated to a uniform temperature of about 1800°F, substantially less than the 2200°F required by some prior art methods. After preheating, the skelp travels through two successive and conventional roll stands, each with an opposed pair of rolls which cooperate to form the skelp into a cylindrical shape with the opposite edges being immediately adjacent to one another. Thereafter, the present invention contemplates at least two different embodiments.

In the first embodiment, the adjacent edges of the cylindrically formed skelp move past an induction heater which heats only the edges to a welding temperature of about 2700°F, while the rest of the skelp remains at about 1800°F. The skelp with heated edges then immediately passes through a welding roll stand where the nearly molten opposite edges are welded together with controlled pressure to form a tube or pipe. The tube seam or weld is then quenched and air cooled as it is passing through pairs of roll stands which exert a controlled pressure on the tube. The quenching and cooling operation continues until the temperature of the tube is substantially circumferentially uniform. Then the tube is pulled through additional roll stands where it is reduced in diameter and finally cut to length. After cutting to length, the tube passes through a final set of sizing rolls to obtain the precise diameter and shape required.

In the second embodiment, the cylindrically formed but unwelded skelp is initially reduced in diameter. Thereafter, the adjacent edges of the reduced skelp move past an induction heater, which heats the edges to welding temperature. The formed skelp with heated edges then immediately passes through a welding roll stand where the edges are welded together under controlled pressure to form the tube. The welded tube is subsequently cut and sized. By reducing before welding, the chance of weld upset in the formed tube is minized, but the adjacent skelp edges must be carefully maintained in their seam down or seam up position through the reduction rolls.

The invention then comprises the features hereinafter fully described and particularly pointed out in the claims, the following description and annexed drawing setting forth in detail illustrative embodiments of the invention, these being indicative, however, of but two of the various ways in which the principles of the invention may be carried out.

## BRIEF DESCRIPTION OF THE DRAWING

Fig. 1 schematically illustrates a continuous weld tube mill constructed in accordance with the present invention and suitable for practicing the method of the present invention.

Fig. 2 schematically illustrates a second embodiment for practicing the method of the present invention in which the induction heating of the adjacent edges and welding thereof occur after the formed skelp has been reduced in diameter.

## DESCRIPTION OF PREFERRED EMBODIMENT

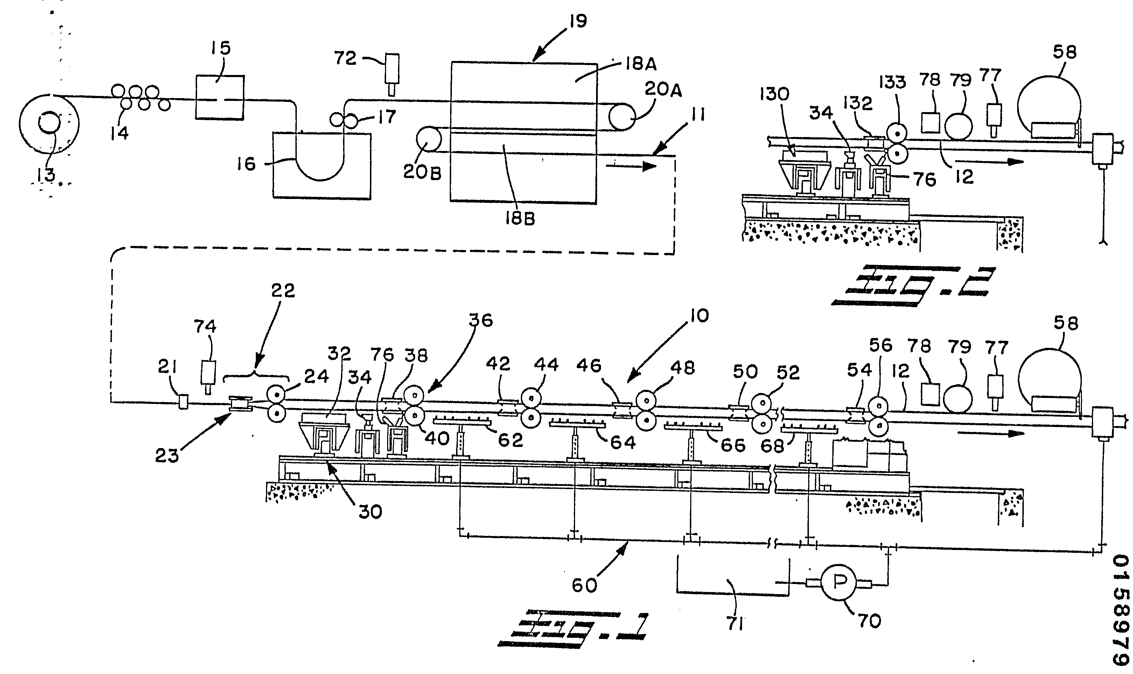

Referring now in more detail to the drawing and initially to Fig. 1, the continuous weld mill 10 of the present invention receives a flat metal strip 11 usually of steel and called a skelp, and forms it into a continuous, welded pipe or tube 12. The skelp 11 may be from about 5 to about 17 inches wide and from about 0.1 to about 0.3 inch thick.

The skelp 11 is delivered to the mill wrapped on coils 13. The skelp 11 is drawn from the coil 13 and is leveled by leveling rolls 14, which push the skelp into and through end welder 15. The trailing edge of one coil is welded to the leading edge of the next coil in end welder 15. The skelp is pushed from the end welder onto the loop floor 16, with the loops providing sufficient skelp to run the mill continuously while permitting the end welder to join the skelp ends. The skelp is pulled off the loop floor 16 by pinch rolls 17 and is then pulled through the preheat chamber 18A and main chamber 18B of furnace 19 by turnarounds 20A and 20B. Turnaround 20A is an idler bull wheel while turnaround 20B is either a driven wheel or series of commonly driven rolls. Tension on the skelp between the driven turnaround 20B and the downstream rolls of the mill is controlled by an electric control circuit between their respective drives.

Depending on the skelp width and thickness, the skelp may be driven at preferred speeds in the range between about 150 and 550 feet per minute, although speeds almost twice as great are contemplated. In the furnace 19, the skelp is heated to about 1800°F. The furnace 19 may be a gas fired conventional furnace having a capacity to heat the skelp to a temperature of 2400°F, but the temperature of the skelp 11 as it leaves the furnace is preferably less than is usual in other processes. In this regard, the skelp leaving the furnace of conventional continuous weld tube mills is heated to the range between 2200°F and 2400°F or even more instead of the preferred 1800°F temperature of the present invention. The lower output temperature of the furnace 19 results in substantially reduced furnace operating, construction and maintenance costs for the weld mill 10 constructed in accordance with the present invention.

After leaving the furnace 19, the skelp 11 passes between edge blowers 21 and then passes through a forming means 22 where it is bent longitudinally into a tubular shape. In the forming means 22, the opposite edges of the skelp are brought close together, and the gap between them is generally less than 1/4 inch. The forming means 22 comprises a first roll stand 23 and a second roll stand 24. Each roll stand 23, 24 includes an opposed pair of rollers which are rotatable about parallel axes which lie in a plane normal to the axis of the skelp 11. The axes of the rolls of the second roll stand 24 are rotated 90° from those of the first roll stand 23. As such, the rolls of the first roll stand horizontally press upon opposite sides of the skelp 11 and the rolls of the second roll stand are one above and one below the skelp and engage it from vertically opposite directions. As shown, the rolls of the first and second roll stands 23 and 24 are arranged to form the skelp edges arcuately downwardly so that the seam will be on the bottom of the formed tube 12. However, the invention contemplates other forming roll orientations to result in different seam positions, such as a seam up position.

After being formed into tubular shape, the opposite edge portions of the skelp 11 are heated by induction heater means 30 to a temperature of about 2700°F. Only the edge portions of the skelp are inductively heated to this temperature, while the balance of the skelp between the heated edges remains at or close to 1800°F. For effective welding it is only necessary to heat the immediate edge portions to the welding temperature of approximately 2700°F and possibly as high as 2800°F. The edge portions heated to the welding temperature may extend approximately 10° of the circumference to either side of the weld seam, and this limited skelp area brought to welding temperature is much narrower than in most processes. Outside this circumferential edge or seam region, there is a sharp downward

-5-

temperature gradient extending for an additional 10°-15° on each side of the seam. The balance of the skelp immediately before being welded is at approximately the same temperature it was upon exiting the furnace 19. This narrow band of edge heating reduces the amount of possible upset caused by welding.

The induction heater means 30 for heating the edge portions of the skelp 11 includes an induction heater coil 32 operating in a range of 300 to 10,000 Hz with the frequency and power being selected for the given application. The induction heater coil 32 is mounted directly adjacent to the edges of the formed skelp 11 and rapidly heats such edges to the weld temperature of approximately 2700°F as they travel past it. By quickly heating only the edge portions of the skelp 11 to the temperature necessary for welding, significant savings in energy consumption can be achieved. Moreover, because the edge portions of the skelp are heated immediately before welding, there is little time for heat to be lost by conduction or dissipation away from the skelp edge portions, and welding temperatures may therefore be accurately controlled. A conventional welding horn 34 may also be used in conjunction with the induction heater to obtain more localized heating or provide another means of heating control. If a welding horn is used, separate controls can be maintained on the skelp temperature coming out of the furnace, on the skelp edge temperature at the induction heater and on the welding edge temperature at the welding horn.

A welding means indicated generally at 36 is located immediately downstream of the induction heater coil 32 and physically closes any gap between the opposite edges of the skelp 11 by pressing the heated edges together and causing them to weld. The weld means 36 includes a conventional roll stand 40 having opposed rolls arranged to engage the tube 12 as shown to bring the heated edges into a welded seam. The actual welding may also be performed at the preceding roll stand 38. The stand used for welding is selected based upon material being handled, end product specifications and resultant operating parameters. The pressure exerted by the rolls of the weld stand and the temperature of the skelp edges at the weld stand are closely controlled to minimize any upset or internal bead in the pipe.

Although the tube 12 is now welded, further processing is necessary to produce a finished product. In general the tube 12 will be cooled and then reduced in diameter with roll stands 42, 44, 46, 48, 50, 52, 54 and 56 being located downstream of the welding means 36. The reduction of the tube is not started until the temperature of the weld area has substantially equalized with the temperature of the rest of the tube. This temperature equalization also minimizes upset or internal beading. This temperature equalization is expedited and controlled by cooling means indicated generally at 60.

The cooling means includes pipe manifolds 62, 64, 66 and 68 having holes therein which direct water against the seam or weld. A pump 70 circulates the water from a reservoir 71 to the manifolds for spraying under relatively high pressure. After contacting the pipe, the water may be cooled and returned to reservoir 71 for subsequent recirculation. The water manifolds 62, 64, 66 and 68 are respectively positioned between successive pairs of roll stands to cooperate therewith in cooling and reducing in diameter the formed and welded tube 12.

Each of the roll stands 42-56 is designed to a dimension and driven at a speed selected to control the diameter reduction and wall thickness based on the product specifications for the pipe being formed. After substantially uniform temperature for the pipe is obtained, the successive reduction stands must be run at different speeds relative to one another and to the forming and feed stands to control tube O.D. and wall thickness as is known in the industry. Each successive reduction roll stand runs faster than the previous stand to accommodate the increase in speed caused by the reduction in diameter. The individual rolls of the respective stands 42-56 are adjustable to permit the pressure on the tube to be selected for each individual roll stand according to the temperature and forming function desired.

The continuous weld tube mill 10 may also include appropriate controls and sensors for automatically controlling the tube making process. For example, a thickness gauge 72 may be located upstream of the furnace, and a temperature sensor 74 to measure temperature across the strip width may be located between the furnace 19 and the forming means 22. A weld temperature sensor 76 may be located between the induction heater means 30 and the welding means 36, and a device 77 for measuring the finished dimension of the pipe may be located downstream of the last roll stand 56. Inputs from these various sensors may be used to control, for example, the speed of rolls feeding the strip into the furnace as well as the speeds of the various rolls in the roll stands 23, 24 and 38-56. These inputs may also be used to control such other critical process parameters such as temperature, pressure, steel mass processed per unit of time, wall thickness, etc. A linear velocity measuring device 78 is also located upstream of the flying saw to measure the velocity of the passing tube and to control the power supplied to the induction heater in accordance with the velocity measured.

In addition, the pressure with which certain rolls bear against the skelp or tube may be adjusted remotely, while others are adjusted manually in a manner well known to those skilled in the art. Finally, although the continuous weld tube mill 10 has been shown with four pairs of rolls stands downstream of the welding means, this is only by way of example, and more or fewer roll stands could be provided as necessary.

The reduction rolls drive the continuous pipe into a flying saw 58 to cut the pipe into discrete preselected lengths. A measuring device 79 is positioned between the last roll stand and the flying saw to measure the length of the passing pipe and to control the flying saw 58 accordingly, thereby to obtain cut pipes of the desired length. A sizing mill (not shown) is used downstream of saw 58 to round up the pipe to eliminate high spots, low spots and/or rolls marks, and to give the pipe product its final required outside diameter dimension.

Turning now to the second embodiment shown in Fig. 2, like reference numerals have been used to indicate like parts, and it will be appreciated that the mill described above is used with the exceptions noted. In this regard, diameter reduction begins immediately after the skelp is formed into its cylindrical shape with adjacent but unwelded edges. This tube reduction occurs by passing the formed skelp through a preselected number of driven roll stands, with four pairs of stands being shown by way of example in Fig. 1. The roll stands are carefully controlled and set to retain the unwelded skelp edges in their proper orientation and relative spacing during movement through the reduction roll stands. The water quenching system 60 is eliminated from the reduction roll stand portion of the process since the tube is at a substantially uniform temperature for reduction.

After reduction, the formed tube passes immediately over the induction heater 130 inductively to heat the edges of the strip to welding temperature, and it will be appreciated that the formed skelp edges may also be heated in other orientations, such as seam up. The induction heater 130 is heating the same mass of steel per unit of time as in the first embodiment, but the tube is moving at a faster speed because of diameter reduction. The position of the edges relative to the induction heater may be monitored by an eddy current device or the like in the control system to verify spacial alignment between the induction heater and tube edges to maintain heating efficiency and uniformity. A conventional welding horn may also be used in the second embodiment if additional edge heating is required. The heated edges are then welded together in either stand 132 or 133, and the only pressure applied to the seam is the pressure exerted by the rolls of stand 132 or 133. Since the welded seam does not have to undergo reduction and the water cooling associated with reduction as shown in the first embodiment, the temperature differentials between the preheated skelp and the inductively heated edges can be increased, if desired or necessary, without increasing weld upset propensities. Therefore, the second embodiment is the preferred embodiment.

Thus it is clear that the present invention provides a new and improved method and apparatus 10 for making continuous welded tubing. The mill 10 reduces the energy consumed and provides more accurate temperature control of the welding process because the induction heater 30 or 130 used to heat the edges of the skelp to welding temperature is located immediately upstream of the welding means 36 or 132. In prior art devices, the heaters have been used to heat flat skelp and have been located upstream of the roll stands used to form the material from a flat skelp to a tubular shape. According to the present invention, the skelp as a whole is heated only as hot as is required to bend in into a tubular shape. Thereafter, only the portions of the formed skelp, i.e. the edge portions, are heated to welding temperature while the intermediate portions of the skelp remain at a substantially lower temperature.

What is claimed is:

1.    A continuous weld mill process to make metal tubes or pipes comprising the steps of first forming a continuously moving preheated strip of metal into a cylindrical shape with the strip edges being positioned immediately adjacent one another, heating the edge portions to a selected weld temperature and welding the edges together to form a pipe.

2.    The process of claim 1 including maintaining the portion of the strip intermediate the edge portions at a temperature lower than the selected weld temperature while raising the temperature of the edge portions.

3.    The process of claim 2 wherein the temperature difference between the edge portions and the intermediate portions of the metal strip may be as high as 1000° F.

4.    The process of claim 3 including cooling the pipe weld zone after welding the edge portions together.

5.    The process of claim 4 including the step of reducing the diameter of the tube after the edge portions and intermediate portions have reached approximately the same temperature.

6.    The process of claim 2 wherein the metal is steel and the selected weld temperature is about 2700° F.

7.    The process of claim 6 wherein the metal is steel and the preheat temperature is approximately 1800° F.

8.    The process of claim 2 wherein said step of raising the temperature of the edge portions of the strip includes the step of inductively heating the edge portions.

9.    The process of claim 8 further comprising the step of reducing the diameter of the tube after forming but before induction heating the edges.

10.    The process of claim 8 further comprising the step of providing additional heater means to further heat the edges if required.

11.    The process of claim 8 further comprising the step of controlling and monitoring the operating parameters of the process to improve efficiency.

12. A continuous process mill for making metal pipe, said mill comprising furnace means for heating a flat metal strip passing therethrough to a temperature lower than a selected weld temperature, forming stand means for shaping the strip into a cylindrical shape having opposed edges of the strip immediately adjacent one another,

welding stand means for welding the opposed edges of the strip together to form a pipe, and

induction heater means disposed between said forming stand means and said welding means for heating the opposed, immediately adjacent edge portions to a selected weld temperature.

13. The mill of claim 12 including cooling means for cooling the tube downstream of said welding stand means.

14. The mill of claim 12 wherein said induction heater means is positioned immediately adjacent the welding stand means and includes means for heating the opposed edge portions of the strip while the intermediate portion of the strip remains at a temperature lower than the temperature of the edge portions.

15. The mill of claim 12 wherein said induction heater means heats the opposed edge portions to as much as 1000°F hotter than the intermediate portion of the strip.

16. The mill of claim 14 including means for cooling the welded edge portions of the tube to the temperature of the intermediate portion and diameter reduction stand means for thereafter reducing the diameter of the cooled tube.

17. The mill of claim 14 for making steel tubing, said furnace means including means for heating said strip to as high a temperature as 2400°F, at desired line speeds.

18. The mill of claim 14 wherein said induction heater means includes means for heating the edge portions of the strip to about 2700°F.

19. The mill of claim 15 including means for cutting welded tube to predetermined lengths.

20. The mill of claim 14 further including diameter reduction stand means positioned between said forming stand means and said induction heater means to reduce the diameter of the cylindrically shaped strip before edge heating and welding.

21. The mill of claim 14 further including monitoring and control means automatically to control the operating parameters of the mill.

22. The mill of claim 11 further including a welding horn to increase the welding temperature of the strip edges.

Fig.2

Fig.1

0158979

European Patent Office

EUROPEAN SEARCH REPORT

. Application number

# DOCUMENTS CONSIDERED TO BE RELEVANT

EP 85104419.8

| Category | Citation of document with indication, where appropriate, of relevant passages | Relevant to claim | CLASSIFICATION OF THE APPLICATION (Int Cl 4) |
|---|---|---|---|
| X | US - A - 2 748 734 (F.J.KENNEDY) <br> * Fig. 1-16 * | 1,2,6 | B 23 K 31/06 |
| A | * Fig. 1-16 * | 7,9,10, 11,19 | |
| D,A | US - A - 4 357 512 (NISHIMOTO) <br> * Totality * | 1-22 | |
| A | US - A - 2 687 465 (T.J.CRAWFORD) <br> * Fig. 6 * | | |

TECHNICAL FIELDS SEARCHED (Int. Cl 4)

B 23 K 11/00
B 23 K 31/00

The present search report has been drawn up for all claims

| Place of search | Date of completion of the search | Examiner |
|---|---|---|
| VIENNA | 18-06-1985 | BENCZE |